# EUROPÄISCHE PATENTSCHRIFT

(11) **EP 1 358 690 B1**
(45) Veröffentlichungstag und Bekanntmachung des Hinweises auf die Patenterteilung: **29.06.2005**
(21) Anmeldenummer: 01993955.2
(22) Anmeldetag: 06.11.2001
(51) Int. Cl.: H01M 8/02, H01M 8/04

(54) **BRENNSTOFFZELLENSTAPEL**
FUEL CELL STACK
EMPILEMENT DE PILES A COMBUSTIBLE

(30) Priorität: 08.11.2000 DE 10055253
(43) Veröffentlichungstag der Anmeldung: 05.11.2003
(73) Patentinhaber: DaimlerChrysler AG, 70567 Stuttgart (DE)
(72) Erfinder: BLANK, Felix, 78464 Konstanz (DE); HELLER, Cosmas, 88045 Friedrichshafen (DE); SCHMID, Ottmar, 88677 Markdorf (DE)
(86) Internationale Anmeldenummer: PCT/DE2001/004158
(87) Internationale Veröffentlichungsnummer: WO 2002/039529

(56) Entgegenhaltungen:
- PATENT ABSTRACTS OF JAPAN vol. 017, no. 549 (E-1443), 4. Oktober 1993 (1993-10-04) -& JP 05 159790 A (TOKYO GAS CO LTD), 25. Juni 1993 (1993-06-25)
- PATENT ABSTRACTS OF JAPAN vol. 2000, no. 06, 22. September 2000 (2000-09-22) -& JP 2000 090947 A (HONDA MOTOR CO LTD), 31. März 2000 (2000-03-31)

## Beschreibung

Die Erfindung betrifft einen Brennstoffzellenstapel nach dem Oberbegriff des Patentanspruchs 1.

Brennstoffzellenstapel gemäß dem Stand der Technik umfassen mindestens eine, üblicherweise jedoch eine Mehrzahl einzelner Brennstoffzellen, die neben oder übereinander gestapelt sind. Eine einzelne Zelle umfasst zwei Verteilerplatten zur Verteilung der Fluide und eine dazwischen angeordnete Membran-Elektroden-Einheit, auch abgekürzt als MEA bezeichnet. Eine MEA umfasst dabei eine Anode, eine Kathode und eine dazwischen angeordnete protonenleitende Elektrolytmembran. Mittels der protonenleitenden Elektrolytmembran (PEM) wird ein Protonentransport von der Anode zur Kathode gewährleistet. Die Verteilerplatten weisen anoden- und kathodenseitig Gaskanäle (Anoden- und Kathodenkanäle) zur Zu- und Abführung des brennstoffhaltigen Anodengases, z.B. Wasserstoff, und des sauerstoffhaltigen Kathodengases, z.B. Luft auf.

An der Kathode entsteht in einer elektrochemischen Reaktion Produktwasser. Die MEA unterliegt allerdings insbesondere am Eintritt des Kathodengases in den Kathodenkanal einem starken Feuchtigkeitsentzug. Dieser Feuchtigkeitsentzug wird durch die Wasserverdampfung aufgrund der hohen Temperaturen, die in der elektrochemischen Reaktion und beim Stromtransport entstehen, verursacht. Durch den elektroosmotischen Transport von Wasserstoff-Wasser-Verbindungen, z.B. Hydronium Ionen H(H₂O)⁺, die Wasser von der Anode zur Kathode transportieren, wird dieser Effekt verstärkt.

Ein lokales Austrocknen der MEA führt zu einer Absenkung der Protonenleitfähigkeit und damit zu einer Verringerung der Zellspannung und des Wirkungsgrads der Brennstoffzelle. Außerdem kommt es aufgrund des im weiteren Verlauf des Kathodenkanals immer mehr gebildeten Produktwassers normalerweise zu einer Anhebung des Taupunktes und des Wasserdampfpartialdrucks des Kathodengases. Einhergehend mit dem Anstieg des Wasserdampfpartialdrucks sinkt der Sauerstoffpartialdruck entlang des Kathodenkanals, was ebenfalls eine Erniedrigung der Zellspannung und somit eine Erniedrigung des Wirkungsgrads zur Folge hat.

US 4,769,297 offenbart einen Brennstoffzellenstapel mit porösen Elektroden und hydrophilen porösen Verteilerplatten. Die Verteilerplatten nehmen das kathodenseitig in der elektrochemischen Reaktion gebildete Produktwasser auf und transportieren es von der Kathodenseite der Verteilerplatte auf die Anodenseite einer benachbarten Brennstoffzelle. Somit soll die MEA der benachbarten Brennstoffzelle befeuchtet werden. Gleichzeitig transportiert die Verteilerplatte das Produktwasser zum Eingang des Kathodengaskanals, wodurch das Kathodengas zusätzlich befeuchtet werden soll.

Nachteile der hydrophilen, porösen Verteilerplatten sind die hohen Herstellungskosten sowie die vergrößerte Plattendicke. Weitere Nachteile sind die hohe Empfindlichkeit der Verteilerplatten hinsichtlich hoher Zelltemperaturen sowie der verringerte Wirkungsgrad aufgrund des zusätzlichen Sauerstofftransports, der durch die poröse Verteilerplatte zwischen benachbarten Brennstoffzellen möglich ist.

Zur Regulierung der Feuchtigkeit des Kathodengases wird in US 4,973,530 ein Brennstoffzellenstapel vorgeschlagen, der zur Regulierung der Feuchtigkeit des Kathodengases ein weiteres Medium, z. B. Wasser, und somit einen weiteren separaten Fluidkreislauf aufweist. Die Verteilerplatten benachbarter Brennstoffzellen weisen hierbei zwei aneinandergrenzende und in Strömungsverbindung stehende Kanalbereiche auf. Im ersten Kanalbereich wird das Kathodengas an die MEA geleitet. Nach Durchströmen des ersten Kanalbereichs strömt das Kathodengas in den zweiten Kanalbereich und wird dort an eine wasserdurchlässige Membran geleitet. Auf der anderen Seite dieser wasserdurchlässigen Membran wird Wasser entlanggeführt, so dass das Kathodengas in diesem zweiten Kanalbereich befeuchtet werden kann. In einer weiteren Ausführung offenbart US 4,973,530 auch die gleichzeitige Regulie rung der Feuchtigkeit des Anodengases. Ein Nachteil ist, dass in dieser Anordnung mindestens ein weiteres Medium und somit ein weiterer Fluidkreislauf benötigt wird. Daraus ergeben sich weitere Nachteile hinsichtlich einer kompakten Bauform des Brennstoffzellenstapels. Gegenüber herkömmlichen Brennstoffzellenstapeln weist dieses Konzept auch Nachteile hinsichtlich des reduzierten Wirkungsgrades auf grund einer verkleinerten Fläche der MEA auf.

Aufgabe der Erfindung ist es, einen Brennstoffzellenstapel zu schaffen, mit dem es möglich ist, ohne Verwendung eines zusätzlichen Mediums sowie ohne poröse und hydrophile Verteilerplatten ein Austrocknen der MEA am Eingang der Gaskanäle zu verhindern.

Die Aufgabe wird von dem Brennstoffzellenstapel gemäß Patentanspruch 1 gelöst. Vorteilhafte Ausführungen der Erfindung sind Gegenstand von Unteransprüchen.

In dem erfindungsgemäßen Brennstoffzellenstapel, insbesondere ein PEM-Brennstoffzellenstapel im Niederdruck-Betrieb, münden entlang der Gaskanäle im Kanalbereich der Verteilerplatte Verbindungskanäle von den Portbereichen in die Gaskanäle ein. Dabei sind Verbindungskanäle zwischen den Gaskanälen zur Verteilung des Gases und dem Portbereich zur Zuführung des Gases vorhanden. Die erfindungsgemäße Maßnahme kann sowohl kathodenseitig für das Kathodengas als auch anodenseitig für das Anodengas angewandt werden.

Mittels der erfindungsgemäßen Verbindungskanäle wird frisches, unverbrauchtes Gas aus den Portbereichen lokal in die Gaskanäle zudosiert. Insbesondere kann z.B. Luft in den Kathodengaskanal und z.B. Wasserstoff in den Anodengaskanal lokal zudosiert werden. Das zudosierte Gas kann un- oder teilbefeuchtet sein. Somit wird ein Austrocknen der MEA am Eingang der Gaskanäle und am Ort der Zudosierung mittels der erfindungsgemäßen Verbindungskanäle verhindert, ohne dass ein weiteres Medium zur Befeuchtung der MEA benötigt wird. Somit wird ein Absenken der Protonenleitfähigkeit der MEA verhindert.

Ein Vorteil der erfindungsgemäßen Verbindungskanäle ist, dass auf der gesamten Länge der Gaskanäle mehrmals frisches, unverbrauchtes Gas zudosiert werden kann, so dass dadurch eine Gasmischung aus teilverbrauchtem, feuchtem Gas und frischem, unverbrauchtem, un- oder teilbefeuchtetem Gas entsteht. Dadurch wird die Bildung von Flüssigwasser im Anoden- oder Kathodengaskanal verhindert. Außerdem werden Verluste durch Diffusionsüberspannungen, die durch gebildetes Flüssigwasser entstehen, vermieden.

Im Kathodengaskanal steigt durch die Zugabe von sauerstoffhaltigem Gas, z.B. Luft, der Sauerstoffpartialdruck an, wobei der Wasserdampfpartialdruck sinkt. Somit reicht im Kathodengaskanal, die in der Gasmischung entstehende lokale Feuchte aus, dass sich ein Wasserdampfpartialdruck und ein Taupunkt derart einstellt, dass ein lokales Austrocknen der MEA am Ort der Zudosierung verhindert wird. Dadurch wird auf der gesamten Länge des Kathodengaskanals ein optimaler Wasserdampf- und Sauerstoffpartialdruck des Kathodengases erreicht, so dass ein hoher Wirkungsgrad der Brennstoffzelle und eine große Zellspannung erreicht werden kann.

Ebenso steigt im Anodengaskanal durch Zugabe von brennstoffhaltigem Gas, z.B. Wasserstoff, der Wasserstoffpartialdruck an, wodurch der Wasserdampfpartialdruck sinkt. Dadurch kommt es zu einer Anhebung des Taupunkts, wodurch Kondensationseffekte im Anodengaskanal verhindert werden. Dadurch wird für das Anodengas auf der gesamten Länge des Anodengaskanals ein optimaler Wasserstoff- und Wasserdampfpartialdruck erreicht. Hieraus ergibt sich eine Steigerung der Zellspannung der Brennstoffzelle.

Durch die lokale Zudosierung von frischem, unverbrauchtem Gas wird der Taupunkt der Gase in den Gaskanälen des erfindungsgemäßen Brennstoffzellenstapels auf einem Niveau gehalten, so dass eine Kondensation verhindert wird. Damit wird gewährleistet, dass es zu keiner Flüssigkeitsbildung in den Gaskanälen und somit zu keiner Verblockung der Gaskanäle kommt, was zu einer Verringerung des Wirkungsgrades der Brennstoffzelle führt.

Ein weiterer Vorteil ist, dass die MEA, anders als bei der in der Beschreibungseinleitung erläuterten US 4,973,530 zum Stand der Technik, den gesamten Kanalbereich der Verteilerplatte abdeckt. Dadurch treten Anodengas und Kathodengas auf der gesamten Kanallänge mit der MEA in Kontakt. Hierdurch ergeben sich weitere Vorteile für die Zellspannung und für den Wirkungsgrad der Brennstoffzelle. Außerdem kann dem Kathodengaskanal ein geringer Luftvolumenstrom zudosiert werden, ohne dass die MEA im Kathodeneintrittsbereich durch die unbefeuchtete oder teilweise befeuchtete Luft ausgetrocknet wird. Bei geringen Volumenströmen reicht das Wasserrückhaltevermögen der MEA aus, um ein Austrocknen der MEA zu verhindern.

Darüber hinaus ist die Zudosierung von frischem, unverbrauchtem Gas mittels der Verbindungskanäle unabhängig von der jeweiligen Zellentemperatur. Daraus ergibt sich der Vorteil, dass über den gesamten Leistungsbereich des Brennstoffzellenstapels die Verbindungskanäle eine ausreichende Menge an frischem, unverbrauchtem Gas lokal in die Gaskanäle zudosieren, so dass eine Austrocknung der MEA vermieden wird.

In einer vorteilhaften Ausführung der Erfindung ist der Strömungsquerschnitt der Verbindungskanäle kleiner als der Strömungsquerschnitt der Gaskanäle. Der Volumenstrom des frischen, unverbrauchten Gasstroms wird somit derart dosiert, dass die vorhandene lokale Feuchte im Gaskanal ausreicht, einen ausreichenden Wasserdampfpartialdruck im Gaskanal einzustellen, um zu gewährleisten, dass die MEA am Ort der Gaszugabe nicht austrocknet. Mittels der Verbindungskanäle ist es somit möglich auf der Anodenseite eine optimale Stöchiometrie zwischen Wasserdampf und Brennstoff und auf der Kathodenseite eine optimale Stöchiometrie zwischen Wasserdampf und Sauerstoff einzustellen.

Die Gaskanäle zwischen den beiden Portbereiche zur Zu- und Abführung des Anoden- und Kathodengases können z.B. serpentinenförmig verlaufen, wobei benachbarte Gaskanäle durch Stege räumlich getrennt sind. In einer vorteilhaften Ausführung der Erfindung weisen diese Stege Durchbrechungen, z.B. Einbuchtungen, auf. Mittels dieser Durchbrechungen sind gezielte Querströmungen zwischen benachbarten Gaskanälen möglich. Dadurch ergeben sich weitere Vorteile hinsichtlich der Erhöhung des Taupunktes des Anoden- und Kathodengases.

Um eine homogene Strömung in den Gaskanälen zu erreichen, kann in einer vorteilhaften Ausführung der Erfindung eine Druckdifferenz zwischen den Portbereichen der Zu- und Abführung der Gase vorhanden sein. Dabei ist der Druck im Portbereich zur Gaszuführung höher als der Druck im Portbereich zur Gasabführung.

Die Erfindung wird im folgenden anhand von Zeichnungen näher erläutert. Es zeigen:
- Fig. 1: in Seitenansicht einen erfindungsgemäßen Brennstoffzellenstapel mit stapelförmig angeordneten MEAs und Verteilerplatten,
- Fig. 2: eine erste Ausführung einer Verteilerplatte des erfindungsgemäßen Brennstoffzellenstapels mit Verbindungskanälen zwischen den Gaskanälen und dem Portbereich zur Gaszuführung,
- Fig. 3: eine zweite Ausführung einer Verteilerplatte des erfindungsgemäßen Brennstoffzellenstapels mit Verbindungskanälen zwischen den Gaskanälen und dem Portbereich zur Gaszuführung sowie mit Verbindungskanälen zwischen benachbarten Gaskanalabschnitten.

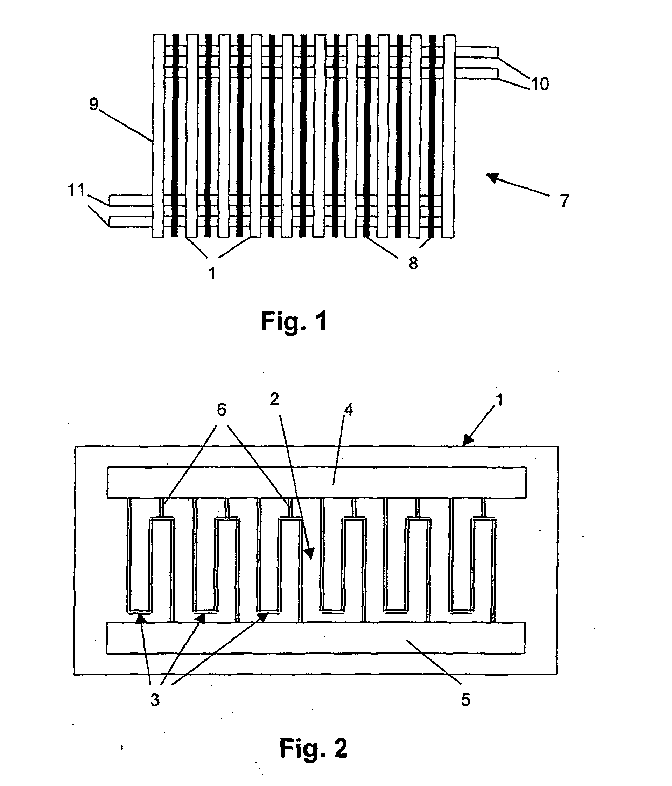

Fig. 1 zeigt in einer Explosionsdarstellung einen erfindungsgemäßen Brennstoffzellenstapel **7** mit stapelförmig angeordneten Membran-Elektroden-Einheiten **8** und Verteilerplatten **1.** Hierbei ist jeweils zwischen zwei benachbarten Verteilerplatten **1** eine Membran-Elektroden-Einheit **8** angeordnet. Der Brennstoffzellenstapel **7** ist mit Endplatten **9** begrenzt und weist Leitungen **10** zur Zu- und Abführung des Anodengases und Leitungen 11 zur Zu- und Abführung des Kathodengases auf. Die Membran-Elektroden-Einheit **8** überdeckt hierbei den gesamten Kanalbereich (nicht sichtbar) der Verteilerplatte 1.

In Fig. 2 ist eine erste Ausführung einer erfindungsgemäßen Verteilerplatte 1 dargestellt. Die Verteilerplatte 1 weist einen Kanalbereich **2** mit mehreren parallelen Gaskanälen **3** auf. Diese Gaskanäle **3** verlaufen von einem Portbereich **4** zur Gaszuführung zu einem Portbereich **5** zur Gasabführung. Die Gaskanäle **3** verlaufen in der gezeigten Ausführung serpentinenförmig. Es ist aber auch möglich, dass anstatt mehrerer Gaskanäle **3** ein durchgängiger, serpentinenförmiger Gaskanal **3** vom Portbereich **4** zur Gaszuführung zum Portbereich **5** zur Gasabführung verläuft. Zwischen dem Portbereich **4** zur Gaszuführung und den Gaskanälen **3** im Kanalbereich **2** verlaufen Verbindungskanäle **6**. Mittels dieser Verbindungskanäle ist eine lokale Zudosierung von frischem, unverbrauchtem Gas aus dem Portbereich **4** zur Gaszuführung in die Gaskanäle **3** möglich.

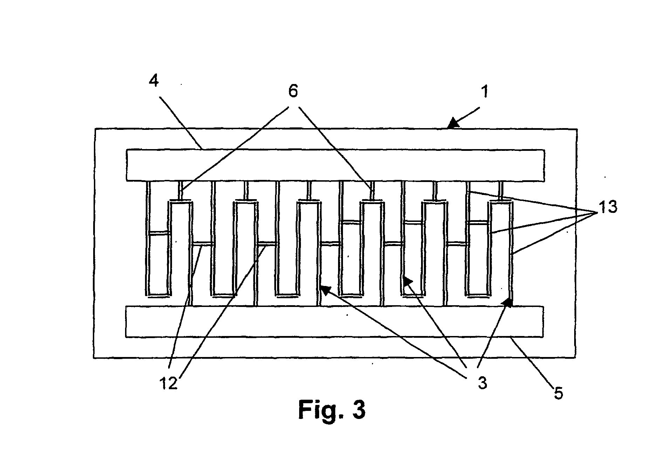

Fig. 3 zeigt eine zweite Ausführung einer erfindungsgemäßen Verteilerplatte **1**. Zusätzlich zu der in Fig. 2 gezeigten Ausführung sind Stege (nicht eingezeichnet) zwischen benachbarten, parallelen Gaskanalabschnitten **13** sowie zwischen benachbarten, parallelen Gaskanälen **3** vorhanden. Diese Stege weisen Durchbrechungen **12,** z.B. Kanäle, auf, so dass benachbarte Gaskanalabschnitte **13** verbunden werden. Es ist aber auch möglich, dass benachbarte Gaskanäle **3** miteinander verbunden werden. Dadurch kommt es zu einer Querströmung zwischen benachbarten Gaskanalabschnitten **13** und zwischen benachbarten Gaskanälen **3**. Die in dieser Ausführung gezeigten Gaskanäle **3** verlaufen serpentinenförmig. Es ist aber auch möglich, dass anstatt mehrerer serpentinenförmiger Gaskanäle **3** ein durchgängiger, serpentinenförmiger Gaskanal **3** vom Portbereich **4** der Gaszuführung zum Portbereich **5** der Gasabführung verläuft.

## Patentansprüche

1. Brennstoffzellenstapel für gasförmigen Brennstoff, umfassend zumindest eine Membran-Elektroden-Einheit (8) und zumindest zwei Verteilerplatten (1), welche einen Kanalbereich (2) mit Gaskanälen (3) zur Verteilung des Anoden- oder Kathodengases an die Membran-Elektroden-Einheit (8) und einen Portbereich (4) zur Zuführung des Anoden- und Kathodengases in den Kanalbereich (2) umfassen, **dadurch gekennzeichnet, dass** entlang der Gaskanäle (3) zusätzliche Verbindungskanäle (6) vom Portbereich (4) einmünden, so dass mittels dieser Verbindungskanäle (6) unverbrauchtes Anoden- oder Kathodengas aus dem Portbereich (4) in die Gaskanäle (3) lokal zudosierbar ist.

2. Brennstoffzellenstapel nach Anspruch 1, **dadurch gekennzeichnet, dass** der Strömungsquerschnitt der Verbindungskanäle (6) kleiner als der Strömungsquerschnitt der Gaskanäle (3) im Kanalbereich (2) ist.

3. Brennstoffzellenstapel nach einem der vorangehenden Ansprüche, **dadurch gekennzeichnet, dass** im Kanalbereich (2) Stege zur räumlichen Trennung benachbarter Gaskanalabschnitte (13) vorhanden sind und dass diese Stege Durchbrechungen (12) aufweisen, so dass eine Strömung zwischen benachbarten Gaskanalabschnitten (13) möglich ist.

4. Brennstoffzellenstapel nach einem der vorangehenden Ansprüche, **dadurch gekennzeichnet, dass** im Portbereich (4) der Anoden- und Kathodengaszuführung ein höherer Druck vorhanden ist, als im Portbereich (5) der Anoden- und Kathodengasabführung.

## Claims

1. Fuel cell stack with gaseous fuel, comprising at least one membrane electrode assembly (8) and at least two distributor plates (1), which comprise a channel region (2) with gas channels (3) for distributing the anode or cathode gas to the membrane electrode assembly (8) and a port region (4) for feeding the anode gas and cathode gas into the channel region (2), **characterized in that** additional connecting channels (6) from the port region (4) open out along the gas channels (3), so that unused anode or cathode gas from the port region (4) can be locally metered into the gas channels (3) by means of these connecting channels (6).

2. Fuel cell stack according to Claim 1, **characterized in that** the cross section of flow of the connecting channels (6) is smaller than the cross section of flow of the gas channels (3) in the channel region (2).

3. Fuel cell stack according to one of the preceding claims, **characterized in that**, in the channel region (2), there are webs for spatially separating adjacent gas channel sections (13), and **in that** these webs have apertures (12), so that flow is possible between adjacent gas channel sections (13).

4. Fuel cell stack according to one of the preceding claims, **characterized in that** there is a higher pressure in the port region (4) of the anode and cathode gas feed than in the port region (5) of the anode and cathode gas discharge.

## Revendications

1. Empilement de piles à combustible pour combustible gazeux, comprenant au moins une unité à électrodes et à membrane (8) et au moins deux plaques distributrices (1) qui comportent une zone de canal (2) présentant des canaux pour gaz (3) et destinée à distribuer le gaz anodique et le gaz cathodique sur l'unité à électrodes et à membrane (8), et une zone de raccordement (4) pour alimenter la zone de canal (2) en gaz anodique et en gaz cathodique, **caractérisé en ce que** des canaux de liaison supplémentaires (6) débouchent depuis la zone de raccordement (4) le long des canaux pour gaz (3), de sorte que du gaz anodique ou cathodique non consommé provenant de la zone de raccordement (4) peut être ajouté localement par dosage dans les canaux pour gaz (3) au moyen de ces canaux de liaison (6).

2. Empilement de piles à combustible selon la revendication 1, **caractérisé en ce que** la section transversale d'écoulement des canaux de liaison (6) est plus petite que la section transversale des canaux pour gaz (3) dans la zone de canal (2).

3. Empilement de piles à combustible selon l'une quelconque des revendications précédentes, **caractérisé en ce que** des entretoises sont présentes dans la zone de canal (2) pour séparer dans l'espace des tronçons (13) voisins de canal pour gaz et **en ce que** ces entretoises présentent des passages (12) de sorte qu'un écoulement est possible entre des tronçons (13) voisins de canal pour gaz.

4. Empilement de piles à combustible selon l'une quelconque des revendications précédentes, **caractérisé en ce que** dans la zone de raccordement (4) de l'alimentation en gaz anodique et en gaz cathodique est présente une pression supérieure à celle dans la zone de raccordement (5) de l'évacuation du gaz anodique et du gaz cathodique.
